# EUROPÄISCHE PATENTSCHRIFT

(11) **EP 4 069 910 B1**
(45) Veröffentlichungstag und Bekanntmachung des Hinweises auf die Patenterteilung: **19.02.2025**
(21) Anmeldenummer: 20817341.9
(22) Anmeldetag: 02.12.2020
(51) Int. Cl.: E03C 1/284

(54) **ABLAUFVORRICHTUNG**
DRAIN DEVICE
DISPOSITIF DE DRAINAGE

(30) Priorität: 06.12.2019 AT 510682019
(43) Veröffentlichungstag der Anmeldung: 12.10.2022
(73) Patentinhaber: Fechter, Harald, 1210 Wien (AT); Rathammer, Andre, 1210 Wien (AT)
(72) Erfinder: RATHAMMER, Andre, 1210 Wien (AT)
(74) Vertreter: Puchberger & Partner Patentanwälte
(86) Internationale Anmeldenummer: PCT/EP2020/084300
(87) Internationale Veröffentlichungsnummer: WO 2021/110758

(56) Entgegenhaltungen:
- DE-C- 346 287
- KR-B1- 101 450 461
- US-A- 1 634 530

## Beschreibung

Die Erfindung betrifft eine Ablaufvorrichtung, insbesondere einen Siphon, gemäß dem Oberbegriff des unabhängigen Patentanspruchs, sowie eine Anordnung umfassend eine Ablaufvorrichtung mit einer Montagevorrichtung einer Sanitäreinrichtung.

Siphons sind im Stand der Technik für die Anwendung mit verschiedenen Sanitäreinrichtungen, beispielsweise Wachbecken, Duschen, Badewannen, Toiletten oder Urinalen bekannt. Derartige Siphons, allgemein Ablaufvorrichtungen, sollen unter anderem sicherstellen, dass ein Gasdurchtritt von einem Abwasserrohr in die Umgebungsluft verhindert wird. Dies dient insbesondere dem Zweck, die Freisetzung von unangenehmen Gerüchen in die Umgebung der Sanitäreinrichtung, also insbesondere in die Raumluft, zu vermeiden.

Es sind unterschiedliche Ausführungen von Siphons bekannt. Eine oft eingesetzte Form ist der sogenannte Röhrensiphon, bei dem ein Wasseraufnahmebereich vorgesehen ist, um einen Gasdurchtritt zwischen Abwasserrohr und Umgebungsluft zu vermeiden. Viele Siphons, unter anderem Röhrensiphons, weisen in Konstruktionen, bei denen die aus der Sanitäreinrichtung abfließende Flüssigkeit eine geringe Fallhöhe aufweist, Nachteile auf. Besonders das kontinuierliche und sofortige Ablaufen der Flüssigkeit ist bei derartigen Konstruktionen problematisch, da ein gewisser statischer Druck überwunden werden muss, um ein Ablaufen der Flüssigkeit zu ermöglichen. Dies bedeutet jedoch, dass sich Flüssigkeit bis zu einem bestimmten Pegelstand ansammelt und erst dann stoßweise abläuft, was insbesondere bei Waschbecken, Duschen, etc. unerwünscht ist. Auch besonders platzsparende Siphon-Konstruktionen sind in Bezug auf den Ablauf der Flüssigkeit oft unzulänglich.

Ablaufvorrichtungen mit einem Betätigungsmechanismus sind beispielsweise aus der KR101450461B1, der US1634530A und der DE346287C bekannt.

Die KR101450461B1 beschreibt ein siphonartiges System, bei dem die Geruchsfreisetzung durch eine Klappe verhindert werden soll. Die US1634530A beschreibt ein siphonartiges System mit einer Klappe zum Ablassen von Schmutz und Fremdkörpern. Die DE346287C beschreibt entfernbare Deckel für ein siphonartiges System, die mit einem Kniehebelverschluss befestigt sind.

Es ist daher eine Aufgabe der Erfindung, eine Ablaufvorrichtung, insbesondere einen Siphon, vorzusehen, der die Nachteile des Standes der Technik überwindet und der auch bei geringer Fallhöhe der ablaufenden Flüssigkeit und/oder bei kleiner Bauweise der Ablaufvorrichtung einen kontinuierlichen und sofortigen Ablauf der Flüssigkeit ermöglicht und dennoch den Geruchsverschluss sicherstellt.

Diese und weitere Aufgaben der vorliegenden Erfindung werden durch eine Ablaufvorrichtung mit den Merkmalen des unabhängigen Patentanspruchs gelöst.

Die Erfindung betrifft somit eine Ablaufvorrichtung, insbesondere einen Siphon, der eine an eine Sanitäreinrichtung anschließbare Einlauföffnung und eine an ein Abwasserrohr anschließbare Ablauföffnung umfasst. Ferner umfasst die Vorrichtung einen zwischen der Einlauföffnung und der Ablauföffnung angeordneten Verschlussabschnitt. Der Gasdurchtritt zwischen Einlauföffnung und Ablauföffnung ist durch Füllen des Verschlussabschnitts mit einer Flüssigkeit verhinderbar.

Erfindungsgemäß kann vorgesehen sein, dass eine Betätigungseinrichtung und eine Belüftungsöffnung vorgesehen sind, wobei die Betätigungseinrichtung in einer Ruheposition die Belüftungsöffnung verschließt und in einer Aktivierungsposition die Belüftungsöffnung freigibt, und wobei in der Aktivierungsposition ein Gasdurchtritt zwischen der Ablauföffnung und der Belüftungsöffnung ermöglicht wird.

Die Betätigungseinrichtung kann also wenigstens zwei voneinander unterschiedliche Positionen einnehmen. Die Umstellung zwischen der Ruheposition und der Aktivierungsposition kann insbesondere durch die Ablaufvorrichtung durchströmende Flüssigkeit bewirkt werden.

Erfindungsgemäß ist vorgesehen, dass die Betätigungseinrichtung durch die Ablaufvorrichtung durchströmende Flüssigkeit in die Aktivierungsposition bringbar ist.

Gegebenenfalls ist vorgesehen, dass die Betätigungseinrichtung als ein um eine Schwenkachse schwenkbarer Betätigungshebel ausgebildet ist. Ein Betätigungshebel kann insbesondere zwei Hebelabschnitte aufweisen, die beidseitig der Schwenkachse angeordnet sind.

Gegebenenfalls kann die Betätigungseinrichtung ein Verschlusselement umfassen, welches in der Ruheposition an der Belüftungsöffnung anliegt und diese verschließt. Insbesondere kann das Verschlusselement Teil eines Hebelabschnitts eines Betätigungshebels sein.

Gegebenenfalls ist vorgesehen, dass die Betätigungseinrichtung einen winkelig angeordneten Anströmabschnitt umfasst. Der Anströmabschnitt kann gegebenenfalls an einem Endabschnitt der Betätigungseinrichtung bzw. des Betätigungshebels angeordnet sein.

Gegebenenfalls ist vorgesehen, dass zwischen der Einlauföffnung und der Ablauföffnung ein Verbindungsrohr angeordnet ist, welches den Verschlussabschnitt umfasst.

Gegebenenfalls ist vorgesehen, dass das Verbindungsrohr einen ersten Fallabschnitt, einen zweiten Fallabschnitt und einen zwischen erstem Fallabschnitt und zweiten Fallabschnitt angeordneten Steigabschnitt umfasst.

Gegebenenfalls ist vorgesehen, dass der Verschlussabschnitt im Bereich des ersten Fallabschnitts und des Steigabschnitts angeordnet ist, und dass die Betätigungseinrichtung im Bereich des zweiten Fallabschnitts angeordnet ist.

Zwischen den Fallabschnitten und dem Steigabschnitt können gegebenenfalls gekrümmte Verbindungsabschnitte angeordnet sein. Bevorzugt verlaufen die Fallabschnitte und der Steigabschnitt im Wesentlichen parallel zueinander.

Gegebenenfalls ist vorgesehen, dass eine Befestigungsvorrichtung zur Befestigung der Ablaufvorrichtung an einem weiteren Bauteil vorgesehen ist. Die Befestigungsvorrichtung kann als Rastvorrichtung oder als Klemmvorrichtung ausgebildet sein.

Gegebenenfalls umfasst die Befestigungsvorrichtung eine Ausnehmung, in die ein Haltebereich eines weiteren Bauteils einführbar ist.

Gegebenenfalls ist vorgesehen, dass die Ablaufvorrichtung ein Röhrensiphon ist. Erfindungsgemäß ist vorgesehen, dass die Belüftungsöffnung in einem Gehäuse der Ablaufvorrichtung angeordnet ist und einen Gasdurchtritt zwischen der Umgebung der Ablaufvorrichtung und einem zwischen der Einlauföffnung und der Ablauföffnung angeordneten Verbindungsrohr ermöglicht.

Gegebenenfalls ist vorgesehen, dass das Verbindungsrohr im Bereich der Einlauföffnung einen Einlaufabschnitt und im Bereich der Ablauföffnung einen Ablaufabschnitt umfasst, wobei der Einlaufabschnitt und der Ablaufabschnitt im Wesentlichen orthogonal zueinander angeordnet sind.

Gegebenenfalls ist vorgesehen, dass der Verschlussabschnitt zwischen Einlaufabschnitt und Ablaufabschnitt angeordnet ist.

Gegebenenfalls ist vorgesehen, dass der Verschlussabschnitt im Bereich eines gekrümmten Verbindungsabschnitts zwischen dem ersten Fallabschnitt und dem Steigabschnitt angeordnet ist.

Die Erfindung betrifft ferner eine Anordnung umfassend eine erfindungsgemäße Ablaufvorrichtung Ablaufvorrichtung mit einer Montagevorrichtung einer Sanitäreinrichtung, insbesondere mit einem Unterputzkasten. Die eingangs beschriebene Problematik der geringen Fallhöhe der einströmenden Flüssigkeit tritt insbesondere bei Unterputzkästen auf, da diese üblicherweise in einer besonders kompakten Bauweise ausgeführt sind.

Gegebenenfalls ist vorgesehen, dass die Befestigungsvorrichtung mit einem Haltebereich der Montagevorrichtung verbunden ist. Der Haltebereich kann beispielsweise als formschlüssig mit der Befestigungsvorrichtung verbindbarer Bereich ausgestaltet sein.

Gegebenenfalls ist vorgesehen, dass die Anordnung zusätzlich eine Sanitäreinrichtung, insbesondere ein Waschbecken umfasst.

Gegebenenfalls ist vorgesehen, dass ein Ablauf der Sanitäreinrichtung mit der Einlauföffnung der Ablaufvorrichtung verbunden ist.

Weitere optionale Merkmale der Erfindung ergeben sich aus den abhängigen Patentansprüchen, den Figuren sowie aus der Beschreibung der Ausführungsbeispiele.

Nachfolgend wird die Erfindung anhand eines exemplarischen Ausführungsbeispiels im Detail erläutert. Dieses Ausführungsbeispiel dient lediglich der Veranschaulichung der Funktion einer Vorrichtung mit bevorzugten Merkmalen der Erfindung und soll den Schutzbereich der Patentansprüche nicht einschränken.

Es zeigen:
Fig. 1 eine seitliche Schnittansicht einer Ablaufvorrichtung gemäß einem Ausführungsbeispiel der vorliegenden Erfindung;
Fig. 2 eine weitere seitliche Schnittansicht einer Ablaufvorrichtung gemäß dem Ausführungsbeispiel der vorliegenden Erfindung; und
Fig. 3 eine Schnittansicht einer Anordnung der Ablaufvorrichtung gemäß dem Ausführungsbeispiel an einem Unterputzkasten.

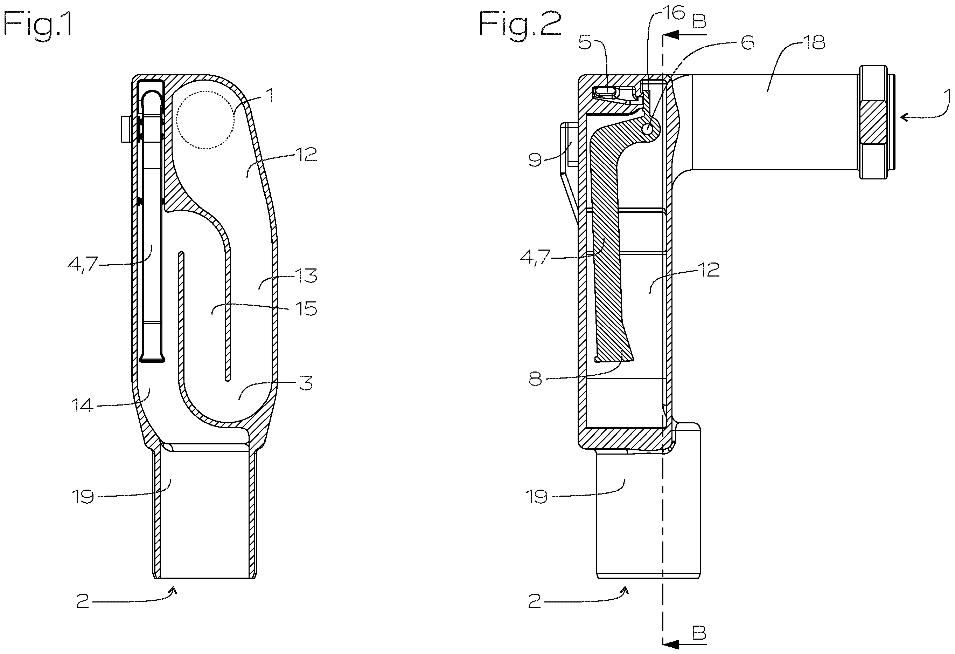

Fig. 1 und 2 zeigen zwei seitliche Schnittansichten einer Ablaufvorrichtung gemäß einem Ausführungsbeispiel der vorliegenden Erfindung, wobei die entsprechenden Schnittebenen jeweils etwa orthogonal zueinander angeordnet sind.

Die Ablaufvorrichtung umfasst eine Einlauföffnung 1, sowie eine Ablauföffnung 2. Die Einlauföffnung 1 ist zur Verbindung mit einer Sanitäreinrichtung, beispielsweise einem Waschbecken, ausgebildet. Die Ablauföffnung 2 ist zur Verbindung mit einem Abwasserrohr bzw. allgemein mit einem Abwassersystem ausgebildet.

Zwischen der Einlauföffnung 1 und der Ablauföffnung 2 ist ein Verbindungsrohr 12 angeordnet, das den Flüssigkeitsdurchtritt von der Einlauföffnung 1 zur Ablauföffnung 2 erlaubt. Die in diesem Ausführungsbeispiel dargestellte Ablaufvorrichtung ist als Röhrensiphon ausgebildet. Dementsprechend umfasst das Verbindungsrohr 12 einen ersten Fallabschnitt 13, einen zweiten Fallabschnitt 14 und einen zwischen den Fallabschnitten 13, 14 angeordneten Steigabschnitt 15. Die einzelnen Abschnitte verlaufen im Wesentlichen parallel zueinander. Die Abschnitte sind seriell, also aufeinander folgend, angeordnet und jeweils über gekrümmte Verbindungsabschnitte miteinander verbunden. Insbesondere ist das Verbindungsrohr 12 in diesem Ausführungsbeispiel im Wesentlichen S-förmig ausgebildet.

In diesem Ausführungsbeispiel umfasst das Verbindungsrohr 12 einen Einlaufabschnitt 18 und einen Ablaufabschnitt 19, die zueinander im Wesentlichen orthogonal angeordnet sind. Der Einlaufabschnitt 18 ist im Bereich der Einlauföffnung 1 angeordnet, während der Ablaufabschnitt 19 im Bereich der Ablauföffnung 2 angeordnet ist. Der Verschlussabschnitt 3, die Fallabschnitte 13, 14 und der Steigabschnitt 15 sind in diesem Ausführungsbeispiel zwischen dem Einlaufabschnitt 18 und dem Ablaufabschnitt 19 angeordnet.

In der bestimmungsgemäßen Verwendung des in den Fig. 1 und 2 dargestellten Siphons soll ein Gasdurchtritt vom mit der Ablauföffnung 2 verbundenen Abflussrohr in die Umgebungsluft der mit der Einlauföffnung 1 verbundenen Sanitäreinrichtung verhindert werden. Dies dient insbesondere dem Zweck, die Freisetzung von unangenehmen Gerüchen aus dem Abwassersystem zu verhindern. Daher umfasst die Ablaufvorrichtung den Verschlussabschnitt 3, der in diesem Ausführungsbeispiel am Übergang zwischen erstem Fallabschnitt 13 und Steigabschnitt 15 angeordnet ist. Der Verschlussabschnitt 3 ist mit einer Flüssigkeit, insbesondere mit aus der Sanitäreinrichtung ablaufender Flüssigkeit, befüllbar und wenn der Verschlussabschnitt 3 einen ausreichenden Füllstand aufweist, verhindert die Flüssigkeit einen Gasdurchtritt von der Ablauföffnung 2 zur Einlauföffnung 1.

Durch die Positionierung der Einlauföffnung 1 ist die Fallhöhe und damit der Strömungsdruck der einlaufenden Flüssigkeit gering. Um ein sofortiges und kontinuierliches Ablaufen der Flüssigkeit aus der Sanitäreinrichtung zu ermöglichen, umfasst die erfindungsgemäße Ablaufvorrichtung dieses Ausführungsbeispiels eine als Betätigungshebel 7 ausgebildete Betätigungseinrichtung 4. Der Betätigungshebel 7 ist schwenkbar um eine Schwenkachse 6 gelagert und kann wenigstens eine Ruheposition und eine Aktivierungsposition einnehmen.

Der Betätigungshebel 7 nimmt die Ruheposition ein, wenn keine Flüssigkeit durch die Ablaufvorrichtung strömt. In der Ruheposition verschließt ein Verschlusselement 16 des Betätigungshebels 7 eine Belüftungsöffnung 5 im Gehäuse 17 der Ablaufvorrichtung. Die Belüftungsöffnung 5 stellt eine gasdurchlässige Verbindung zwischen dem Inneren des Gehäuses 17, also dem Verbindungsrohr 12, und der Umgebung der Ablaufvorrichtung her.

Der Betätigungshebel 7 nimmt die Aktivierungsposition ein, wenn Flüssigkeit durch die Ablaufvorrichtung strömt. Durch die Schwenkbewegung des Betätigungshebels 7 wird die Belüftungsöffnung 5 vom Verschlusselement 16 freigegeben und ein Gasdurchtritt zwischen der Ablauföffnung 2 und der Belüftungsöffnung 5 bzw. der Umgebungsluft der Ablaufvorrichtung wird ermöglicht. Dadurch kommt es zu einem Druckausgleich zwischen dem Inneren der Ablaufvorrichtung und der Umgebungsluft und ein kontinuierlicher Ablauf von Flüssigkeit wird gewährleistet.

Die Belüftungsöffnung 5 wirkt unter anderem als Druckausgleich zwischen dem Verbindungsrohr 12 und der Umgebungsluft.

Um die Betätigung des Betätigungshebels 7 zu verbessern, verfügt dieser in diesem Ausführungsbeispiel über einen winkelig angeordneten Anströmabschnitt 8. Der Anströmabschnitt 8 weist eine Querschnittsverbreiterung auf und ist an einem Ende des Betätigungshebels angeordnet.

Sobald keine Flüssigkeit mehr durch die Ablaufvorrichtung strömt, also beispielsweise nachdem die Flüssigkeitszufuhr in die Sanitäreinrichtung beendet wurde, bewegt sich der Betätigungshebel in Abwesenheit eines Strömungsdrucks durch die Flüssigkeit wieder in die Ruheposition, sodass ein Gasdurchtritt durch die Belüftungsöffnung 5 und damit die Bildung von unangenehmen Gerüchen in der Umgebungsluft verhindert wird. Bei Wiederherstellung der Flüssigkeitsströmung wird der Betätigungshebel 7 wieder in die Aktivierungsposition gebracht, wie oben beschrieben.

Die in den Fig. 1 und 2 dargestellte Ablaufvorrichtung weist zusätzlich eine Befestigungsvorrichtung 9 auf. Die Befestigungsvorrichtung 9 ist am Gehäuse 17 der Ablaufvorrichtung angeordnet und dient der Befestigung der Ablaufvorrichtung an einem weiteren Bauteil, beispielsweise an einer Montagevorrichtung. Insbesondere dient die Befestigungsvorrichtung 9 gemäß diesem Ausführungsbeispiel der Befestigung der Ablaufvorrichtung an einem Unterputzkasten.

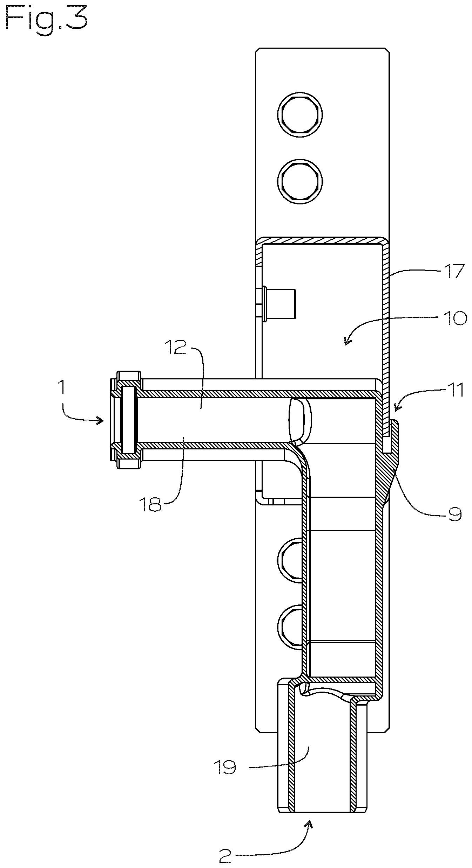

Fig. 3 zeigt eine Schnittansicht einer Anordnung der Ablaufvorrichtung gemäß dem Ausführungsbeispiel an einem Unterputzkasten. Die Ablaufvorrichtung mit der Einlauföffnung 1 und der Ablauföffnung 2 und dem zwischen der Einlauföffnung 1 und der Ablauföffnung 2 angeordneten Verbindungsrohr 12 ist mit der Befestigungsvorrichtung 9 an einer Wandung eines Unterputzkastens 10 befestigt. Die Wandung weist einen Haltebereich 11 auf, der in eine Ausnehmung der Befestigungsvorrichtung 9 einführbar ist. Dies erleichtert die Montage der erfindungsgemäßen Ablaufvorrichtung.

Zur Vereinfachung der Darstellung sind einige Elemente, die in den Fig. 1 und 2 gezeigt sind in der Fig. 3 nicht wiedergegeben.

Während das hier beschriebene Ausführungsbeispiel einen Röhrensiphon zeigt, ist die vorliegende Erfindung auch bei anderen Siphon-Bauweisen einsetzbar, beispielsweise bei Flaschensiphons, Tassensiphons, oder dergleichen.

### Bezugszeichenliste

- 1: Einlauföffnung
- 2: Ablauföffnung
- 3: Verschlussabschnitt
- 4: Betätigungseinrichtung
- 5: Belüftungsöffnung
- 6: Schwenkachse
- 7: Betätigungshebel
- 8: Anströmabschnitt
- 9: Befestigungsvorrichtung
- 10: Unterputzkasten
- 11: Haltebereich
- 12: Verbindungsrohr
- 13: erster Fallabschnitt
- 14: zweiter Fallabschnitt
- 15: Steigabschnitt
- 16: Verschlusselement
- 17: Gehäuse
- 18: Einlaufabschnitt
- 19: Ablaufabschnitt

## Patentansprüche

1. Ablaufvorrichtung, insbesondere Siphon, umfassend eine an eine Sanitäreinrichtung anschließbare Einlauföffnung (1) und eine an ein Abwasserrohr anschließbare Ablauföffnung (2), sowie einen zwischen der Einlauföffnung (1) und der Ablauföffnung (2) angeordneten Verschlussabschnitt (3), wobei der Gasdurchtritt zwischen Einlauföffnung (1) und Ablauföffnung (2) durch Füllen des Verschlussabschnitts (3) mit einer Flüssigkeit verhinderbar ist, weiter umfassend eine Betätigungseinrichtung (4) und eine Belüftungsöffnung (5), wobei die Betätigungseinrichtung (4) in einer Ruheposition die Belüftungsöffnung (5) verschließt und in einer Aktivierungsposition die Belüftungsöffnung (5) freigibt, und wobei in der Aktivierungsposition ein Gasdurchtritt zwischen der Ablauföffnung (2) und der Belüftungsöffnung (5) ermöglicht wird, und wobei die Betätigungseinrichtung (4) durch die die Ablaufvorrichtung durchströmende Flüssigkeit in die Aktivierungsposition bringbar ist, **dadurch gekennzeichnet, dass** die Belüftungsöffnung (5) in einem Gehäuse (17) der Ablaufvorrichtung angeordnet ist und einen Gasdurchtritt zwischen der Umgebung der Ablaufvorrichtung und einem zwischen der Einlauföffnung (1) und der Ablauföffnung (2) angeordneten Verbindungsrohr (12) ermöglicht.

2. Ablaufvorrichtung nach Anspruch 1, **dadurch gekennzeichnet, dass** die Betätigungseinrichtung (4) als ein um eine Schwenkachse (6) schwenkbarer Betätigungshebel (7) ausgebildet ist.

3. Ablaufvorrichtung nach einem der Ansprüche 1 oder 2, **dadurch gekennzeichnet, dass** die Betätigungseinrichtung (4) einen winkelig angeordneten Anströmabschnitt (8) umfasst.

4. Ablaufvorrichtung nach einem der Ansprüche 1 bis 3, **dadurch gekennzeichnet, dass** zwischen der Einlauföffnung (1) und der Ablauföffnung (2) ein Verbindungsrohr (12) angeordnet ist, welches den Verschlussabschnitt (3) umfasst.

5. Ablaufvorrichtung nach Anspruch 4, **dadurch gekennzeichnet, dass** das Verbindungsrohr (12) einen ersten Fallabschnitt (13), einen zweiten Fallabschnitt (14) und einen zwischen erstem Fallabschnitt (13) und zweiten Fallabschnitt (14) angeordneten Steigabschnitt (15) umfasst.

6. Ablaufvorrichtung nach Anspruch 5, **dadurch gekennzeichnet, dass** der Verschlussabschnitt (3) im Bereich des ersten Fallabschnitts (13) und des Steigabschnitts (15) angeordnet ist, und dass die Betätigungseinrichtung (4) im Bereich des zweiten Fallabschnitts (14) angeordnet ist.

7. Ablaufvorrichtung nach Anspruch 5 oder 6, **dadurch gekennzeichnet, dass** der Verschlussabschnitt (3) im Bereich eines gekrümmten Verbindungsabschnitts zwischen dem ersten Fallabschnitt (13) und dem Steigabschnitt (15) angeordnet ist.

8. Ablaufvorrichtung nach einem der Ansprüche 1 bis 7, **dadurch gekennzeichnet, dass** eine Befestigungsvorrichtung (9) zur Befestigung der Ablaufvorrichtung an einem weiteren Bauteil vorgesehen ist.

9. **Anordnung** umfassend Ablaufvorrichtung nach einem der Ansprüche 1 bis 8 mit einer Montagevorrichtung einer Sanitäreinrichtung, insbesondere mit einem Unterputzkasten (10).

10. Anordnung nach Anspruch 9, **dadurch gekennzeichnet, dass** die Befestigungsvorrichtung (9) mit einem Haltebereich (11) der Montagevorrichtung verbunden ist.

11. Anordnung nach Anspruch 9 oder 10, **dadurch gekennzeichnet, dass** die Anordnung zusätzlich eine Sanitäreinrichtung, insbesondere ein Waschbecken umfasst.

12. Anordnung nach Anspruch 11, **dadurch gekennzeichnet, dass** ein Ablauf der Sanitäreinrichtung mit der Einlauföffnung (1) der Ablaufvorrichtung verbunden ist.

## Claims

1. A **drainage apparatus,** in particular a trap, comprising an inlet opening (1), which is connectable to a sanitary device, and a drainage opening (2), which is connectable to a sewage pipe, as well as a closure section (3), which is arranged between the inlet opening (1) and the drainage opening (2), wherein the passage of gas between the inlet opening (1) and the drainage opening (2) can be prevented by filling the closure section (3) with a liquid, further comprising an actuating device (4) and a vent opening (5), wherein, in a rest position, the actuating device (4) closes the vent opening (5) and, in an activation position, releases the vent opening (5), and wherein, in the activation position, a gas passage between the drainage opening (2) and the vent opening (5) is allowed, and wherein the actuating device (4) can be brought into the activation position by the liquid flowing through the drainage apparatus, **characterized in that** the vent opening (5) is arranged in a housing (17) of the drainage apparatus and allows a gas passage between the environment of the drainage apparatus and a connecting tube (12), which is arranged between the inlet opening (1) and the drainage opening (2).

2. The drainage apparatus according to claim 1, **characterized in that** the actuating device (4) is designed as an actuating lever (7) which can be pivoted about a pivot axis (6).

3. The drainage apparatus according to one of claims 1 or 2, **characterized in that** the actuating device (4) comprises an angularly arranged inflow section (8).

4. The drainage apparatus according to one of claims 1 to 3, **characterized in that** a connecting tube (12) is arranged between the inlet opening (1) and the drainage opening (2) and comprises the closure section (3).

5. The drainage apparatus according to claim 4, **characterized in that** the connecting tube (12) comprises a first drop section (13), a second drop section (14) and a riser section (15), which is arranged between the first drop section (13) and the second drop section (14).

6. The drainage apparatus according to claim 5, **characterized in that** the closure section (3) is arranged in the area of the first drop section (13) and the riser section (15), and **in that** the actuating device (4) is arranged in the area of the second drop section (14).

7. The drainage apparatus according to claim 5 or 6, **characterized in that** the closure section (3) is arranged in the area of a curved connecting section between the first drop section (13) and the riser section (15).

8. The drainage apparatus according to one of claims 1 to 7, **characterized in that** a fastening apparatus (9) is provided for fastening the drainage apparatus to a further component.

9. An **arrangement** comprising a drainage apparatus according to one of claims 1 to 8 with a mounting apparatus of a sanitary device, in particular a flush-mounted box (10).

10. The arrangement according to claim 9, **characterized in that** the fastening apparatus (9) is connected to a holding area (11) of the mounting apparatus.

11. The arrangement according to claim 9 or 10, **characterized in that** the arrangement additionally comprises a sanitary device, in particular a sink.

12. The arrangement according to claim 11, **characterized in that** a drain of the sanitary device is connected to the inlet opening (1) of the drainage apparatus.

## Revendications

1. **Dispositif d'écoulement,** en particulier siphon, comprenant une ouverture d'entrée (1) pouvant être raccordée à une installation sanitaire et une ouverture d'écoulement (2) pouvant être raccordée à une conduite d'égout, ainsi qu'une section d'obturation (3) disposée entre l'ouverture d'entrée (1) et l'ouverture d'écoulement (2), dans lequel le passage de gaz entre l'ouverture d'entrée (1) et l'ouverture d'écoulement (2) peut être empêché par le remplissage de la section d'obturation (3) avec un liquide, comprenant en outre un dispositif d'actionnement (4) et une ouverture d'aération (5), dans lequel le dispositif d'actionnement (4) obture l'ouverture d'aération (5) dans une position de repos et libère l'ouverture d'aération (5) dans une position d'activation, et dans lequel, dans la position d'activation, un passage de gaz est rendu possible entre l'ouverture d'écoulement (2) et l'ouverture d'aération (5), et dans lequel le dispositif d'actionnement (4) peut être amené dans la position d'activation par le liquide traversant le dispositif d'écoulement, **caractérisé en ce que** l'ouverture d'aération (5) est disposée dans un boîtier (17) du dispositif d'écoulement et permet un passage de gaz entre l'environnement du dispositif d'écoulement et un tube de liaison (12) disposé entre l'ouverture d'entrée (1) et l'ouverture d'écoulement (2).

2. Dispositif d'écoulement selon la revendication 1, **caractérisé en ce que** le dispositif d'actionnement (4) se présente sous la forme d'un levier d'actionnement (7) pouvant pivoter autour d'un axe de pivotement (6).

3. Dispositif d'écoulement selon l'une des revendications 1 ou 2, **caractérisé en ce que** le dispositif d'actionnement (4) comprend une section d'afflux (8) disposée angulairement.

4. Dispositif d'écoulement selon l'une des revendications 1 à 3, **caractérisé en ce qu'**entre l'ouverture d'entrée (1) et l'ouverture d'écoulement (2) est disposé un tube de liaison (12) qui comprend la section d'obturation (3).

5. Dispositif d'écoulement selon la revendication 4, **caractérisé en ce que** le tube de liaison (12) comprend une première section de chute (13), une deuxième section de chute (14) et une section de montée (15) disposée entre la première section de chute (13) et la deuxième section de chute (14).

6. Dispositif d'écoulement selon la revendication 5, **caractérisé en ce que** la section d'obturation (3) est disposée au niveau de la première section de chute (13) et de la section de montée (15), et **en ce que** le dispositif d'actionnement (4) est disposé au niveau de la deuxième section de chute (14).

7. Dispositif d'écoulement selon la revendication 5 ou 6, **caractérisé en ce que** la section d'obturation (3) est disposée au niveau d'une section de liaison courbe entre la première section de chute (13) et la section de montée (15).

8. Dispositif d'écoulement selon l'une des revendications 1 à 7, **caractérisé en ce qu'**un dispositif de fixation (9) est prévu pour fixer le dispositif d'écoulement à un autre élément de construction.

9. **Agencement** comprenant un dispositif d'écoulement selon l'une des revendications 1 à 8 avec un dispositif de montage d'une installation sanitaire, notamment avec un boîtier encastré (10).

10. Agencement selon la revendication 9, **caractérisé en ce que** le dispositif de fixation (9) est relié à une zone de retenue (11) du dispositif de montage.

11. Agencement selon la revendication 9 ou 10, **caractérisé en ce que** l'agencement comprend en outre une installation sanitaire, notamment un lavabo.

12. Agencement selon la revendication 11, **caractérisé en ce qu'**un avaloir de l'installation sanitaire est relié à l'ouverture d'entrée (1) du dispositif d'écoulement.
